# EUROPÄISCHE PATENTANMELDUNG

(11) **EP 4 589 245 A1**
(43) Veröffentlichungstag der Anmeldung: **23.07.2025**
(21) Anmeldenummer: 24153293.6
(22) Anmeldetag: 22.01.2024
(51) Int. Cl.: G01B 11/00, G01D 5/347

(54) **VERFAHREN UND SYSTEM ZUM BESTIMMEN EINES MASSES FÜR EINE POSITION EINER MESSFLÄCHE AUF EINER OBERFLÄCHE EINES ENDLOSMATERIALS IN EINER LÄNGSRICHTUNG DES ENDLOSMATERIALS**

(71) Anmelder: Fraunhofer-Gesellschaft zur Förderung der angewandten Forschung e.V., 80686 München (DE)
(72) Erfinder: Carl, Daniel, 79110 Freiburg (DE); Regina, David Joel, 79110 Freiburg (DE); Schmid-Schirling, Tobias, 79110 Freiburg (DE)
(74) Vertreter: WSL Patentanwälte Partnerschaft mbB

(57) **Zusammenfassung**

Die vorliegende Erfindung betrifft ein Verfahren sowie ein System zum Bestimmen eines Ma-ßes für eine Position einer Messfläche auf einer Oberfläche eines Endlosmaterials in einer Längsrichtung des Endlosmaterials. Es hat sich herausgestellt, dass bei Endlosmaterialien die Mikrostruktur der Oberfläche, zumindest wenn sie über eine Zeile senkrecht zu der Längsrichtung des Endlosmaterials betrachtet wird, eine eineindeutige oder beinahe eineindeutige Signatur nach Art eines Fingerabdrucks (englisch Fingerprint) bildet. Diese Signatur gilt es während der Akquisitionsphase zu erfassen und zusammen mit einer Information über die Position der Signatur auf der Oberfläche (Ordnungskriterium) in der Datenbank abzuspeichern. Dann kann später die gleiche Position anhand der erneut erfassten Signatur und einem Abgleich mit den Signaturen in der Datenbank identifiziert werden. Eine zusätzliche Markierung der Oberfläche ist nicht notwendig.

## Beschreibung

Die vorliegende Erfindung betrifft ein Verfahren sowie ein System zum Bestimmen eines Maßes für eine Position einer Messfläche auf einer Oberfläche eines Endlosmaterials in einer Längsrichtung des Endlosmaterials.

Viele Halbzeuge für die Fertigung ganz unterschiedlicher Endprodukte werden heute in Form von Endlosmaterial bereitgestellt. Dabei wird das Halbzeug nach seiner Herstellung in der Regel zu einem Coil (Wickel) aufgespult und dann dem Hersteller der Endprodukte bereitgestellt. Beispiele für solche Halbzeuge in Form von Endlosmaterial sind Drähte und (Metall-)Bleche, aber auch Kunststofffolien und Papier.

Gleichzeitig steigen die Qualitätsanforderungen an die Endprodukte und der Wunsch nach einer vollständig ausschussfreien Produktion. Dies setzt beispielsweise voraus, dass zur Qualitätssteigerung nachverfolgbar sein muss, ob ein Fehler eines Endprodukts, das mithilfe eines Abschnitts aus einem Endlosmaterial hergestellt wurde, mit Produktions-, Material- oder Qualitätsparametern bei der Herstellung des Endlosmaterials korreliert. Dies setzt jedoch voraus, dass das Endlosmaterial auch in seinem vereinzelten Zustand noch lückenlos zu den bei einer Herstellung geltenden Bedingungen rückverfolgbar ist.

Eine solche Rückverfolgbarkeit ermöglicht es darüber hinaus auch, die Herstellung von fehlerhaften Endprodukten auszuschließen, indem aus Abschnitten eines Endlosmaterials, welche die vorgegebenen Qualitätsmaßstäbe nicht einhalten, erst gar keine Endprodukte gefertigt werden. Diese fehlerhaften Abschnitte des Endlosmaterials sollen stattdessen direkt einer Wiederverwertung zugeführt werden. Auch bei der Herstellung von Endlosmaterial können immer wieder Abschnitte auftreten, die den Qualitätsanforderungen nicht genügen, während auf dem gleichen Coil Endlosmaterial vorhanden ist, welches allen Qualitätsanforderungen genügt. Will man heute vollständig vermeiden, dass mit einem solchen Endlosmaterial auch nur ein einziges fehlerhaftes Teil hergestellt wird, muss bis heute das gesamte Coil verworfen und gegebenenfalls wiederverwendet werden, es darf nicht in die Produktion des Endprodukts gelangen.

Jede Art der Rückverfolgung von Abschnitten aus einem Endlosmaterial setzt voraus, dass ein Maß für eine Position auf der Oberfläche des Endlosmaterials in einer Längsrichtung des Endlosmaterials bei der Weiterverarbeitung bestimmbar ist. Dazu werden im Stand der Technik Markierungen auf die Oberfläche des Endlosmaterials aufgebracht. Eine solche Markierung erfolgt beispielsweise durch Lasergravur oder Farbaufdruck.

Ein anderes im Stand der Technik genutztes Verfahren zur Rückverfolgung einzelner Abschnitte des Endlosmaterials besteht darin, eine Anfangsposition auf der Oberfläche des Endlosmaterials zu definieren und den Ort davon ausgehend in Einheiten einer Länge des Materials, einer Anzahl von Umdrehungen des Coils oder ähnlichem zu bestimmen.

Die auf diese Weise archivierte Information, die grundsätzlich eine Rückverfolgung ermöglichen könnte, geht aber typischerweise bei der Weiterverarbeitung des Coils, beispielsweise durch mehrfaches Umspulen, verloren. Zudem ist die Bestimmung einer Position eines Abschnitts des Endlosmaterials zur Rückverfolgung nach einer Vereinzelung des Materials unmöglich.

Demgegenüber ist es eine Aufgabe der vorliegenden Erfindung, ein Verfahren und ein System bereitzustellen, die es ermöglichen, ein Maß für eine Position auf der Oberfläche eines Endlosmaterials in einer Längsrichtung des Endlosmaterials markierungsfrei zu bestimmen.

Die zuvor genannte Aufgabe wird erfindungsgemäß durch ein Verfahren zum Bestimmen eines Maßes für eine Position einer Messfläche auf einer Oberfläche eines Endlosmaterials in einer Längsrichtung des Endlosmaterials gemäß dem unabhängigen Anspruch 1 dieser Anmeldung gelöst.

Das erfindungsgemäße Verfahren umfasst zwei Phasen, nämlich eine Akquisitionsphase und eine Identifizierungsphase. Dazu weist das Verfahren in der Akquisitionsphase die Schritte auf:
A) Erfassen einer räumlichen Intensitätsverteilung einer von der Oberfläche des Endlosmaterials reflektierten oder gestreuten oder durch die Oberfläche des Endlosmaterials transmittierten elektromagnetischen Strahlung in einer Mehrzahl von Akquisitionsflächen, wobei jede aus der Mehrzahl von Akquisitionsflächen in der Längsrichtung an einer Akquisitionsposition angeordnet ist, wobei alle Akquisitionsflächen zueinander deckungsgleich mit einer Längsausdehnung in der Längsrichtung und einer Querausdehnung in einer Richtung senkrecht zu der Längsrichtung sind, wobei zwei in der Längsrichtung benachbarte Akquisitionsflächen zwei zumindest abschnittsweise verschiedene Bereiche der Oberfläche überdecken, wobei jede Akquisitionsfläche eine Mehrzahl von Messpunkten aufweist und wobei die Mehrzahl von Messpunkten in zumindest einer Zeile senkrecht zu der Längsrichtung angeordnet sind,
B) Erzeugen einer Mehrzahl von Akquisitionsdatensätzen, wobei jeder Akquisitionsdatensatz die Messpunkte genau einer Akquisitionsfläche beschreibt,
C) Komprimieren jedes aus der Mehrzahl von Akquisitionsdatensätzen mit genau einem Datenkompressionsverfahren, sodass für jede Akquisitionsfläche ein Positionsdatensatz erhalten wird, und
D) Speichern jedes Positionsdatensatzes zusammen mit einem Ordnungskriterium in einer Datenbank, wobei mit dem Ordnungskriterium die Akquisitionsposition der Akquisitionsfläche bestimmbar ist.

In der Identifizierungsphase umfasst das Verfahren die Schritte:
i) Erfassen der räumlichen Intensitätsverteilung einer von der Oberfläche des Endlosmaterials reflektierten oder gestreuten oder durch die Oberfläche des Endlosmaterials transmittierten elektromagnetischen Strahlung in einer Messfläche, wobei die Messfläche eine Mehrzahl von Messpunkten aufweist und wobei die Mehrzahl von Messpunkten in zumindest einer Zeile senkrecht zu der Längsrichtung angeordnet ist, wobei die Messfläche eine Querausdehnung senkrecht zu der Längsrichtung und eine Längsausdehnung in der Längsrichtung und eine Querposition senkrecht zu der Längsrichtung aufweist, sodass immer mindestens eine Akquisitionsfläche vollständig innerhalb der Messfläche liegt,
ii) Erzeugen eines Messdatensatzes, wobei der Messdatensatz die Messpunkte der Messfläche beschreibt,
iii) Komprimieren des Messdatensatzes mit dem Datenkompressionsverfahren, sodass für die Messfläche ein komprimierter Messdatensatz erhalten wird, und
iv) Berechnen einer Ähnlichkeit zwischen dem komprimierten Messdatensatz und einer Mehrzahl von Positionsdatensätzen aus der Datenbank und
v) wenn die in Schritt iv) berechnete Ähnlichkeit für einen der Positionsdatensätze einen vorgegebenen Ähnlichkeitsschwellenwert übersteigt, Bestimmen des Ordnungskriteriums zu diesem Positionsdatensatz und
vi) Ausgeben des in Schritt v) bestimmten Ordnungskriteriums für die Position der Messfläche auf der Oberfläche.

Es hat sich herausgestellt, dass bei Endlosmaterialien die Mikrostruktur der Oberfläche, zumindest wenn sie über eine Zeile senkrecht zu der Längsrichtung des Endlosmaterials betrachtet wird, eine eineindeutige oder beinahe eineindeutige Signatur nach Art eines Fingerabdrucks (englisch Fingerprint) bildet. Diese Signatur gilt es während der Akquisitionsphase zu erfassen und zusammen mit einer Information über die Position der Signatur auf der Oberfläche (Ordnungskriterium) in der Datenbank abzuspeichern. Dann kann später die gleiche Position anhand der erneut erfassten Signatur und einem Abgleich mit den Signaturen in der Datenbank identifiziert werden.

Die Akquisitionsphase dient dem Einmessen des Endlosmaterials, insbesondere des Endlosmaterials für ein Coil. Statt das Endlosmaterial, beispielsweise durch Gravur, auf seiner Oberfläche zu markieren, wird die strukturelle Signatur der Oberfläche selbst als Markierung verwendet.

Relevant sind dabei primär diejenigen Informationen, welche die ausgeprägte Mikrostruktur in der jeweiligen Akquisitionsfläche charakteristisch beschreiben. Nicht relevant - und daher ggf. vernachlässigbar - sind Informationen, die allgemein die Oberfläche beschreiben.

Im Sinne der vorliegenden Anmeldung bezeichnet die Längsrichtung des Endlosmaterials diejenige Richtung, in der das Endlosmaterial endlos, d.h. ungleich länger ist als in der dazu senkrechten Querrichtung. Diese Längsrichtung ist typischerweise die Vorschubrichtung des Endlosmaterials während seiner Herstellung und Weiterverarbeitung.

In einer Ausführungsform wird jede aus der Mehrzahl von Akquisitionsflächen zeitlich nacheinander, d.h. seriell, erfasst.

Das Erfassen der räumlichen Intensitätsverteilung der von der Oberfläche des Endlosmaterials reflektierten oder gestreuten oder durch die Oberfläche transmittierten elektromagnetischen Strahlung umfasst in einer Ausführungsform das Aufnehmen eines Bildes für jede Akquisitionsfläche. Dabei kann ein zeilenförmiges, sich senkrecht zu der Längsrichtung erstreckendes Bild genügen. In einer Ausführungsform jedoch sind die Messpunkte der Akquisitionsflächen und der Messfläche in einer Mehrzahl von sich senkrecht zu der Längsrichtung erstreckenden Zeilen innerhalb der Akquisitionsfläche bzw. der Messfläche angeordnet, sodass von jeder Akquisitionsfläche ein flächiges Bild mit einer matrixförmigen Anordnung von Bildpunkten oder Pixeln erfasst wird.

In einer Ausführungsform gibt das so aufgenommene Bild, d.h. die Mehrzahl der erfassten Messpunkte, eine reine Intensitätsverteilung über die Akquisitionsfläche hinweg wieder. In einer Ausführungsform der Erfindung umfasst das Aufnehmen des Bildes das Aufnehmen eines Interferogramms oder eines Speckle-Musters. Interferometrische Messverfahren oder Speckle-Messverfahren vermögen eine sehr charakteristische Signatur der Mikrostruktur einer Oberfläche zu generieren.

Entscheidend bei dem Erfassen der Messpunkte der Akquisitionsflächen ist, dass die Akquisitionsflächen zumindest abschnittsweise verschiedene Bereiche der Oberfläche überdecken, d.h. einander nicht vollständig überlappen. Auf diese Weise kann jede Akquisitionsfläche eine andere Position in der Längsrichtung charakterisieren. Für die Akquisitionsflächen wird diese Position in der Längsrichtung als Akquisitionsposition bezeichnet.

Die Gesamtheit der Information über alle Messpunkte einer jeden Akquisitionsfläche wird in jeweils einem Akquisitionsdatensatz beschrieben. Die Kongruenz oder Deckungsgleiche der einzelnen Akquisitionsflächen zueinander dient der einfachen Handhabbarkeit der aufgenommenen Akquisitionsdatensätze. Die Gesamtheit aller Akquisitionsdatensätze für ein Coil des Endlosmaterials bestimmt in einer Ausführungsform die maximale Größe der Suchmenge, deren Elemente, d.h. Positionsdatensätze, später bei einer Weiterverarbeitung des Endlosmaterials zu durchsuchen sind. Diese Gesamtmenge der Positionsdatensätze oder eine Auswahl daraus (eingeschränkte Suchmenge aus der Gesamtmenge aller Positionsdatensätze eines Coils) sind mit der Information über die Messpunkte einer Messfläche abzugleichen, um auf diese Weise ein Maß für die Position der jeweiligen Messfläche zu bestimmen.

Das Ordnungskriterium, welches zu jedem Positionsdatensatz in der Datenbank abgelegt wird, dient dazu, die Akquisitionsposition der Akquisitionsfläche auf der Oberfläche bestimmbar zu machen. Das Ordnungskriterium kann ganz unterschiedliche Ausprägungen annehmen.

Sind die Akquisitionsdatensätze äquidistant voneinander beanstandet, so genügt es, als Ordnungskriterium die Akquisitionsdatensätze in der Längsrichtung aufsteigend oder absteigend durchzunummerieren. Kennt man den Beginn des Endlosmaterials, so bezeichnet dann die Nummer der jeweiligen Akquisitionsfläche eindeutig ihre Akquisitionsposition in der Längsrichtung des Endlosmaterials. In einer Ausführungsform der Erfindung ist das Ordnungskriterium ein Zeitstempel. Kennt man die Vorschubgeschwindigkeit des Endlosmaterials in der Akquisitionsphase, mit welcher das Endlosmaterial gegenüber einem die Akquisitionsflächen aufnehmenden stationären Bildsensor bewegt wird, so bezeichnet der Zeitstempel eindeutig die Akquisitionsposition der Akquisitionsfläche auf der Oberfläche des Endlosmaterials. In einer Ausführungsform der Erfindung ist das Ordnungskriterium der Abstand der Akquisitionsposition von einer auf dem Endlosmaterial festgelegten Nullposition.

Ein Coil eines Endlosmaterials weist in einer Ausführungsform eine Länge von mehreren Kilometern auf. In einer Ausführungsform der Erfindung weist das Coil eine Länge von 1 Kilometer oder mehr, vorzugsweise von 5 Kilometern oder mehr und besonders bevorzugt von 10 Kilometern oder mehr auf. Daher ist die Anzahl von Akquisitionsdatensätzen und damit die Datenmenge für ein Coil oder gar für eine Mehrzahl von Coils, deren Information durchsuchbar sein muss, sehr groß. Um dennoch einen schnellen Abgleich zu ermöglichen, werden erfindungsgemäß alle aus der Mehrzahl von Akquisitionsdatensätzen mit genau einem Datenkompressionsverfahren komprimiert, sodass für jede Akquisitionsfläche ein Positionsdatensatz erzeugt wird. Der Positionsdatensatz beschreibt verglichen mit dem Akquisitionsdatensatz die für diese Akquisitionsfläche aus den Messpunkten erhaltene Information mit einer verringerten Datenmenge.

Um eine Berechnung einer Ähnlichkeit zwischen den Positionsdatensätzen und dem Bild der Messfläche zu ermöglichen, müssen der komprimierte Messdatensatz und alle Positionsdatensätze mit dem gleichen Datenkompressionsverfahren komprimiert sein.

In einer Ausführungsform der Erfindung beträgt die Größe eines Positionsdatensatzes 10 kB oder weniger.

Darüber hinaus ist es in einer Ausführungsform der Erfindung zweckmäßig, wenn die räumliche Auflösung der Messpunkte in jeder Zeile senkrecht zu der Längsrichtung für die Messfläche und für jede der Akquisitionsflächen gleich ist.

Das Berechnen einer Ähnlichkeit zwischen dem komprimierten Messdatensatz und einer Mehrzahl von Positionsdatensätzen aus der Datenbank umfasst in einer Ausführungsform der Erfindung eine Korrelation des Messdatensatzes und jedem der Positionsdatensätze aus der Suchmenge. In einer solchen Ausführungsform ist der Ähnlichkeitsschwellenwert ein Korrelationsschwellenwert.

Das erfindungsgemäße Verfahren ermöglicht es, die Position der Messfläche auf einem Endlosmaterial mit einer hohen Auflösung zu bestimmen. In einer Ausführungsform beträgt die Auflösung mit der die Position der Messfläche in der Längsrichtung bestimmbar ist 10 mm oder weniger, bevorzugt 5 mm oder weniger und besonders bevorzugt 1 mm oder weniger.

Durch das Identifizieren zumindest einer Akquisitionsfläche ist deren Akquisitionsposition, die innerhalb der Messfläche liegt, bekannt. Davon ausgehend lässt sich die Position jeder Zeile von Messpunkten der Messfläche in der Längsrichtung bestimmen

In einem Beispiel hat das Endlosmaterial während der Akquisitionsphase eine Geschwindigkeit von 60 m/min, wobei pro Sekunde zehn Akquisitionsflächen von dem gegenüber dem Endlosmaterial stationären Bildsensor aufgenommen werden. Bei einer Länge des Endlosmaterials von 10.000 m/Coil weist jedes Coil 100.000 Akquisitionsflächen auf. Dies erfordert, wenn man die Suchmenge der zum Bestimmen der Position der Messfläche zu durchsuchenden Positionsdatensätze nicht auf andere Weise einschränkt, 20 Millionen Abgleiche zwischen dem für eine Messfläche erzeugten komprimierten Messdatensatz und den in der Datenbank gespeicherten Positionsdatensätzen. Dabei wird in diesem Beispiel jeder Positionsdatensatz zeilen- und spaltenweise gegenüber dem komprimierten Messdatensatz verschoben und so mit dem gesamten komprimierten Messdatensatz abgeglichen.

In einer Ausführungsform der Erfindung ist die Akquisitionsfläche rechteckig, wobei sich die längere Seite in der Längsrichtung erstreckt. In einer Ausführungsform hat die Akquisitionsfläche eine Erstreckung von 20 mm oder weniger in der Längsrichtung und eine Erstreckung von 10 mm oder weniger in der zu der Längsrichtung senkrechten Querrichtung.

In einer Ausführungsform der Erfindung ist die Mehrzahl von Akquisitionsflächen in der Längsrichtung voneinander beabstandet, vorzugsweise äquidistant beabstandet. In einer Ausführungsform der Erfindung beträgt der Abstand zwischen zwei benachbarten Akquisitionsflächen in der Längsrichtung in einem Bereich von 10 mm bis 100 mm. In einer Ausführungsform der Erfindung ist der Abstand zwischen zwei Akquisitionsflächen gemessen von einem Beginn einer Akquisitionsfläche zum Beginn der nächsten Akquisitionsfläche, sodass der Abstand eine räumliche Periodizität beschreibt. In einer Ausführungsform beschreibt der Abstand eine zeitliche Periodizität, wenn die Vorschubgeschwindigkeit bekannt ist.

In einer Ausführungsform der Erfindung ist jede aus der Mehrzahl von Akquisitionsflächen an einer gleichen Querposition angeordnet, wobei die Querposition in einer Richtung senkrecht zu der Längsrichtung gemessen ist. Eine solche Festlegung der Position aller Akquisitionsflächen in der Richtung senkrecht zur Längsrichtung reduziert die Größe der Messfläche in der Richtung senkrecht zur Längsrichtung und reduziert so den Rechenaufwand bei der Berechnung der Ähnlichkeit.

In einer Ausführungsform der Erfindung umfasst das Erfassen der räumlichen Intensitätsverteilung für jede aus der Mehrzahl von Akquisitionsflächen und für die Messfläche jeweils die Aufnahme eines Bildes, wobei jedem aus der Mehrzahl von Messpunkten auf der Oberfläche des Endlosmaterials ein Pixel des Bildes zugeordnet ist.

In einer Ausführungsform der Erfindung ist die Messfläche rechteckig, wobei sich die längere Seite in der Längsrichtung erstreckt.

In einer Ausführungsform der Erfindung weist die Messfläche eine Querausdehnung senkrecht zu der Längsrichtung und eine Längsausdehnung in der Längsrichtung und eine Querposition senkrecht zu der Längsrichtung auf, sodass höchstens zwei Akquisitionsflächen vollständig innerhalb der Messfläche liegen. Eine solche Einschränkung erhöht die Eindeutigkeit der Messung.

In einer Ausführungsform weisen die erfassten Messpunkte auf der Oberfläche innerhalb der Akquisitionsflächen und innerhalb der Messfläche eine hohe räumliche Auflösung auf, vorzugsweise die gleiche, hohe räumliche Auflösung auf. Auf diese Weise ist die erfasste Signatur der Oberflächenstruktur signifikanter und einzigartiger für die jeweilige Position. In einer Ausführungsform liegt die Pixelauflösungen in einem Bereich von 3 µm/Pixel bis 50 µm/Pixel.

In einer Ausführungsform der Erfindung umfasst das System ein Mikroskop oder ein mikroskopartiges Abbildungssystem zum Abbilden der Messpunkte der Oberfläche auf einen Chip des Bildsensors.

In einer Ausführungsform bedingt die zur optischen Auflösung der Messpunkte notwendige hohe numerische Apertur eine geringe Schärfentiefe.

Als problematisch erweist sich, dass das Endlosmaterial häufig in der Z-Richtung, d.h. in der Richtung des Abstands zwischen einem Bilderfassungschip des Bildsensors und der Oberfläche des Endlosmaterials, zumindest in der Akquisitionsphase bei dem Erfassen in Schritt A) oder in der Identifizierungsphase bei dem Erfassen in Schritt i) nicht vollständig fixiert ist, sondern das Endlosmaterial in dieser Richtung flattert oder schlägt.

Daher umfasst das Verfahren in einer Ausführungsform eine mechanische Fokusnachführung, vorzugsweise mit einer hohen Dynamik, um ein Schlagen oder Vibrieren des Endlosmaterials auszugleichen und dennoch ein scharfes Bild für jede der Akquisitionsflächen und die Messflächen zu erhalten. Dies ist zeitaufwendig und bei den in Rede stehenden Vorschubgeschwindigkeiten für das Endlosmaterial herausfordernd für die notwendigen Regelkreise.

In einer Ausführungsform der Erfindung erfolgt das Erfassen der räumlichen Intensitätsverteilung der elektromagnetischen Strahlung in Schritt A) mit einem Bilderfassungschip mit einer Mehrzahl von matrixförmig in einer ersten Ebene angeordneten Pixeln, wobei die erste Ebene gegenüber einer Ebene der Oberfläche des Endlosmaterials oder gegenüber einer optischen Achse einer die Oberfläche auf den Bilderfassungschip abbildenden Optik in der Akquisitionsphase um eine zu der Ebene der Oberfläche parallele erste Kippachse verkippt ist, wobei das Erfassen der räumlichen Intensitätsverteilung der elektromagnetischen Strahlung in Schritt i) mit einem Bilderfassungschip mit einer Mehrzahl von matrixförmig in einer zweiten Ebene angeordneten Pixeln erfolgt, wobei die zweite Ebene gegenüber der Ebene der Oberfläche des Endlosmaterials oder gegenüber einer optischen Achse einer die Oberfläche auf den Bilderfassungschip abbildenden Optik in der Identifizierungsphase um eine zu der Ebene der Oberfläche parallele zweite Kippachse verkippt ist und wobei die erste Kippachse und die zweite Kippachse voneinander verschiedene Winkel mit der Längsrichtung des Endlosmaterials einschließen.

Die Oberfläche des Endlosmaterials ist zumindest in einer Ausführungsform während der Akquisitionsphase auf der einen Seite und der Identifizierungsphase auf der anderen Seite nicht notwendigerweise parallel zueinander. Daher ist die Orientierung der ersten Kippachse auf die Oberfläche des Endlosmaterials in der Akquisitionsphase bezogen und die Orientierung der zweiten Kippachse ist auf die Oberfläche des Endlosmaterials in der Identifizierungsphase bezogen.

Vorzugsweise unterscheiden sich die Winkel, welche die erste Kippachse und die zweite Kippachse mit der jeweiligen Längsrichtung des Endlosmaterials einschließen, um 90 Grad voneinander. Die erste und die zweite Kippachse sind dann senkrecht zueinander bezogen auf die jeweilige Längsrichtung.

In einer Ausführungsform der Erfindung erstreckt sich die erste Kippachse in der in der Akquisitionsphase oder die zweite Kippachse in der Identifizierungsphase in der Längsrichtung des Endlosmaterials und die jeweils andere Kippachse erstreckt sich in der Querrichtung.

Notwendig ist in einer solchen Ausführungsform mit gegenüber der Oberfläche verkippten Bilderfassungschips, dass jeweils zwei unmittelbar benachbarte Akquisitionsflächen einen maximalen Abstand voneinander aufweisen, sodass immer ein scharf abgebildeter Bereich zumindest einer Akquisitionsfläche mit einem scharf abgebildeten Bereich der Messfläche zusammenfällt. In einer Ausführungsform der Erfindung ist dies gewährleistet, wenn die zwei benachbarten Akquisitionsflächen in der Längsrichtung aneinander anschließen oder einander räumlich überlappen.

Durch das Neigen der Ebene des Bilderfassungschips gegenüber der Oberfläche des Materials bzw. gegenüber der optischen Achse der die Oberfläche auf den Bilderfassungschip abbildenden Optik gibt es, wenn die Ausdehnung des Chips senkrecht zur Kippachse und der Kippwinkel entsprechend gewählt sind, immer einen scharf abgebildeten Bereich der Messfläche bzw. der Akquisitionsfläche.

Kippt man erfindungsgemäß die Ebenen der Bilderfassungschips in der Akquisitionsphase und in der Identifizierungsphase um bezogen auf die Längsrichtung zueinander verschiedene Kippachsen gegenüber der Oberfläche des Endlosmaterials bzw. gegenüber der optischen Achse der abbildenden Optik, so findet sich in dem Bild der Messfläche immer ein scharfer Bereich, der innerhalb eines scharfen Bereichs einer jeden Akquisitionsfläche liegt. Eine solche Ausführungsform kommt daher ohne eine Fokusnachführung aus.

In einer Ausführungsform der Erfindung besteht das Endlosmaterial aus Metall oder Kunststoff. Ein Beispiel für ein Endlosmaterial ist ein Draht oder ein technisches Band, insbesondere eine Folie oder ein Blech, aus einem Nichteisenmetall oder aus Stahl.

In einer Ausführungsform der Erfindung erfolgt das Erfassen der räumlichen Intensitätsverteilung der elektromagnetischen Strahlung in den Schritten A) und i) mittels einer anamorphotischen Abbildung. Auf diese Weise kann eine optische Kompression der Intensitätsverteilung in der Längsrichtung oder in der Querrichtung erreicht werden.

Eine anamorphotische Abbildung verringert die optische Auflösung in einer Richtung und reduziert die Datenmenge und Rechenzeit. Eine solche optische "Kompression" ist insbesondere dann sinnvoll, wenn das Herstellungsverfahren für das Endlosmaterial der Mikrostruktur der Oberfläche eine Vorzugsrichtung aufprägt, beispielsweise in einem Walz- oder Ziehprozess. In einer Ausführungsform der Erfindung erfolgt dann, wenn in Schritt v) die in Schritt iv) berechnete Ähnlichkeit des Messdatensatzes für eine Mehrzahl von Positionsdatensätzen den vorgegebenen Ähnlichkeitsschwellenwert übersteigt, in Schritt vi) das Ausgeben eines der Ordnungskriterien zu der Mehrzahl von Positionsdatensätzen als Maß für die Position der Messflächen nur dann, wenn die Mehrzahl von Positionsdatensätzen zu aufeinanderfolgenden Akquisitionspositionen gehört. Anderenfalls wird der Messdatensatz verworfen. Ein solches Vorgehen stellt eine Möglichkeit zur Lösung für "Mehrfachtreffer" bei dem Abgleich der Messfläche und der Akquisitionsflächen in den Schritten iv) und v) dar.

In einer Ausführungsform der Erfindung wird die Messfläche in der Längsrichtung in eine erste Teilfläche und eine zweite Teilfläche unterteilt, wobei zunächst in Schritt iv) die Ähnlichkeit zwischen einem Teil des komprimierten Messdatensatzes für die erste Teilfläche und einer Mehrzahl von Positionsdatensätzen aus der Datenbank berechnet wird und dann, wenn die Ähnlichkeit für eine der Positionsdatensätze den Ähnlichkeitsschwellenwert übersteigt, in Schritt v) das Ordnungskriterium zu diesem Positionsdatensatz bestimmt. Anderenfalls wird die Ähnlichkeit zwischen einem Teil des komprimierten Messdatensatzes für die zweite Teilfläche und einer Mehrzahl von Positionsdatensätzen aus der Datenbank berechnet und dann, wenn die Ähnlichkeit für einen der Positionsdatensätze den Ähnlichkeitsschwellenwert übersteigt, in Schritt v) das Ordnungskriterium zu diesem Positionsdatensatz bestimmt. Auch eine solche Ausführungsform reduziert die Wahrscheinlichkeit für Mehrfachtreffer beim Abgleich zwischen der Messfläche und den Akquisitionsflächen.

In einer Ausführungsform der Erfindung werden in der Identifizierungsphase die Schritte i) bis vi) für eine Mehrzahl von Positionen der Messfläche auf der Oberfläche wiederholt, wobei das Maß für die Position der Messfläche aus Schritt vi) einer ersten Bestimmung zu einer Einschränkung der Suchmenge aus der Mehrzahl von Positionsdatensätzen bei der Berechnung der Ähnlichkeit in Schritt iv) der folgenden Bestimmung verwendet wird.

Ein häufiger Fall bei der Verarbeitung von Endlosmaterial ist, dass auch die Identifizierungsphase an dem nicht vereinzelten Endlosmaterial ausgeführt wird, sodass bei bekannter Bewegungsrichtung des Endlosmaterials in der Längsrichtung bezogen auf den Bildsensor die Positionsdatensätze der Datenbank, die mit dem komprimierten Messdatensatz abgeglichen werden müssen, auf diejenigen Positionsdatensätze beschränkt werden können, die in der Vorschubrichtung des Endlosmaterials vor der zuletzt erfassten Akquisitionsfläche liegen.

Während in einer Ausführungsform die Identifizierungsphase bereits beginnen kann, während die Akquisitionsphase noch nicht für alle Akquisitionsflächen abgeschlossen ist, ist in einer anderen Ausführungsform die Akquisitionsphase vollständig abgeschlossen bevor die Identifizierungsphase beginnt.

In einer Ausführungsform der Erfindung erfolgt die Akquisitionsphase während des Herstellungsprozesses des Endlosmaterials. Dabei wird in einer Ausführungsform in Schritt D) zusammen mit dem jeweiligen Positionsdatensatz und dem Ordnungskriterium ein Prozessdatensatz in der Datenbank gespeichert. Der Prozessdatensatz beschreibt dabei insbesondere einen Produktionsparameter der Herstellung oder einen Qualitätsparameter des Endlosmaterials an der jeweiligen Akquisitionsposition oder einen Zeitstempel. Auf diese Weise wird ein digitaler Zwilling des Endlosmaterials erstellt, der für jede Position in der Längsrichtung auf der Oberfläche eine Aussage über die Historie des Endlosmaterials während des Herstellungsprozesses oder über seine Qualität beschreibt. So können beispielsweise bei der Weiterverarbeitung des Endlosmaterials Abschnitte, von denen bekannt ist, dass sie mit fehlerhaften Produktionsparametern hergestellt wurden, ausgelassen bzw. herausgeschnitten werden.

In einer Ausführungsform der Erfindung werden während der Akquisitionsphase die Schritte A) bis D) und während der Identifizierungsphase die Schritte i) bis vi) für eine Mehrzahl von Akquisitionsflächen und Messflächen in der Querrichtung nebeneinander parallel ausgeführt. Eine derartige Ausführungsform ermöglicht das Bestimmen eines Maßes für die Position der Messfläche auch dann, wenn das Endlosmaterial bei der Weiterverarbeitung geschnitten wird, wobei die Schnittlinie parallel zur Längsrichtung des Endlosmaterials verläuft, sodass Endlosstreifen des Endlosmaterials gebildet werden. Darüber hinaus ermöglicht es eine solche Ausführungsform, die Ablaufrichtung zu wechseln und dennoch die Positionen bestimmen zu können.

In einer Ausführungsform der Erfindung werden während der Aquisitionsphase die Schritte A) bis D) und während der Identifizierungsphase die Schritte i) bis vi) für zumindest eine Akquisitionsfläche und eine Messfläche auf einer ersten Oberfläche des Endlosmaterials und zumindest eine Akquisitionsfläche und eine Messfläche auf einer zweiten Oberfläche des Endlosmaterials ausgeführt.

In einer Ausführungsform der Erfindung wird die Oberfläche des Endlosmaterials in der Akquisitionsphase oder in der Identifizierungsphase in der Längsrichtung bewegt, wobei die Oberfläche mit einem Blitzlicht beleuchtet wird. Eine solche blitzlichtartige Beleuchtung während dem Erfassen der Akquisitionsflächen oder der Messfläche ermöglicht eine Verringerung der Bewegungsunschärfe auch dann, wenn das Endlosmaterial in der Längsrichtung mit großer Geschwindigkeit bewegt wird.

In einer Ausführungsform der Erfindung wird eine Relativbewegung zwischen der Oberfläche des Endlosmaterials und dem jeweiligen Bildsensor während dem Erfassen der Oberfläche des Endlosmaterials angehalten. In einer solchen Ausführungsform ist der Vorschub schrittweise bzw. intermittierend.

Die zuvor genannte Aufgabe wird erfindungsgemäß auch durch ein System zum Bestimmen eines Maßes für eine Position einer Messfläche auf einer Oberfläche eines Endlosmaterials in einer Längsrichtung des Endlosmaterials gemäß dem darauf gerichteten unabhängigen Anspruch 15 gelöst.

Soweit zuvor Aspekte der Erfindung im Hinblick auf das Verfahren beschrieben wurden, so gelten diese auch für das entsprechende System zum Bestimmen eines Maßes für eine Position einer Messfläche auf einer Oberfläche eines Endlosmaterials und umgekehrt. Soweit das Verfahren mit einem System gemäß dieser Erfindung ausgeführt wird, so weist dieses die entsprechenden Einrichtungen hierfür auf. Insbesondere sind Ausführungsformen des Systems zum Ausführen zuvor beschriebener Ausführungsformen des Verfahrens geeignet.

Der Bildsensor im Sinne der vorliegenden Anmeldung umfasst einen Bilderfassungschip, beispielsweise einen CCD- oder CMOS-Chip sowie eine abbildende Optik, beispielsweise ein Objektiv.

Die Auswerteeinrichtung ist in einer Ausführungsform in Form eines oder mehrerer Rechner mit darauf implementierter Software realisiert. Insbesondere können Teile der Auswerteeinrichtung zum Durchführen der Akquisitionsphase an einem ersten Ort realisiert und Teile der Auswerteeinrichtung zum Durchführen der Identifizierungsphase an einem zweiten Ort realisiert sein. In einer Ausführungsform sind Teile der Auswerteeinrichtung in den ersten und/oder zweiten Bildsensor integriert. Beispielsweise kann das Erzeugen der Akquisitionsdatensätze und/oder des Messdatensatzes in den Bildsensoren erfolgen. Diese umfassen dann neben dem Bilderfassungschip und der abbildenden Optik einen Prozessor.

Weitere Vorteile, Merkmale und Anwendungsmöglichkeiten der vorliegenden Erfindung werden anhand der folgenden Beschreibung von Ausführungsformen und der dazugehörigen Figuren deutlich. In den Figuren sind gleiche Elemente mit identischen Bezugszeichen bezeichnet.
- Figur 1: ist eine schematische Darstellung eines ersten Teils eines erfindungsgemäßen Systems zum Durchführen der Datenerfassung während der Akquisitionsphase.
- Figur 2: ist eine schematische, vergrößerte Darstellung der Anordnung derAkquisitionsflächen auf der Oberfläche des Endlosmaterials aus Figur 1.
- Figur 3: ist eine schematische Darstellung eines zweiten Teils des erfindungsgemäßen Systems zum Durchführen der Datenerfassung während der Identifizierungsphase.
- Figur 4: ist eine schematische, vergrößerte Darstellung der Anordnung derAkquisitionsflächen und der Messfläche aus Figur 3 auf der Oberfläche des Endlosmaterials.
- Figur 5: ist eine schematische, vergrößerte Darstellung einer Messfläche, die zwei Akquisitionsflächen vollständig umfasst.
- Figur 6: ist eine schematische Seitenansicht des Systems aus Figur 1 in einer Anordnung mit einem schräg gestellten Bilderfassungschip und ohne zusätzliche mechanische Fokusnachführung.

Anhand der Figuren wird nun das System 1 aber auch der Ablauf des Verfahrens zum Bestimmen eines Maßes für eine Position 5 einer Messfläche 4 auf einer Oberfläche 3 eines Blechbands 2 beschrieben. Das Herstellen des Blechbands 2 erfolgt durch Walzen aus einem Vormaterial in der Walzanlage 8. Das Blechband 2 ist ein Beispiel für ein Endlosmaterial. Seine Erstreckung in der Längsrichtung 6 ist um ein Vielfaches größer als seine Erstreckung in der Querrichtung 12. In dem hier diskutierten Beispiel wird das Blechband 2 aus Kupfer als Halbzeug zum Herstellen von Akkumulatoren vewendet. Eine solches dünnes Blech 2 verlässt die Anlage 8 zum Herstellen des Blechs 2 und wird danach für den Versand an den Hersteller der Akkumulatoren auf einen Kern 9 aufgewickelt, sodass ein Wickel bzw. ein Coil 10 gebildet wird.

In der Walzanlage 8 kommt es während der Produktion der Folie 2 zu Parameterschwankungen, die sich auf die Qualität des Blechs 2 auswirken. Sind diese Qualitätsschwankungen derart, dass Abschnitte des Blechs 2 in der Produktion nicht verwendet werden können, so musste bisher das gesamte Coil 10 verworfen werden. Dies bedeutet, es wird vollständig eingeschmolzen. Der damit verbundene Energie- und Zeitaufwand ist erheblich.

Das erfindungsgemäße Verfahren ermöglicht es nun, einen vollständigen digitalen Zwilling des Blechs 2 für jedes Coil 10 zu generieren, sodass bei der Weiterverarbeitung Abschnitte mit verminderter Qualität des Blechs 2 beim Abspulen des Coils 10 aus dem Endlosmaterial herausgeschnitten und nicht zum Endprodukt verarbeitet werden.

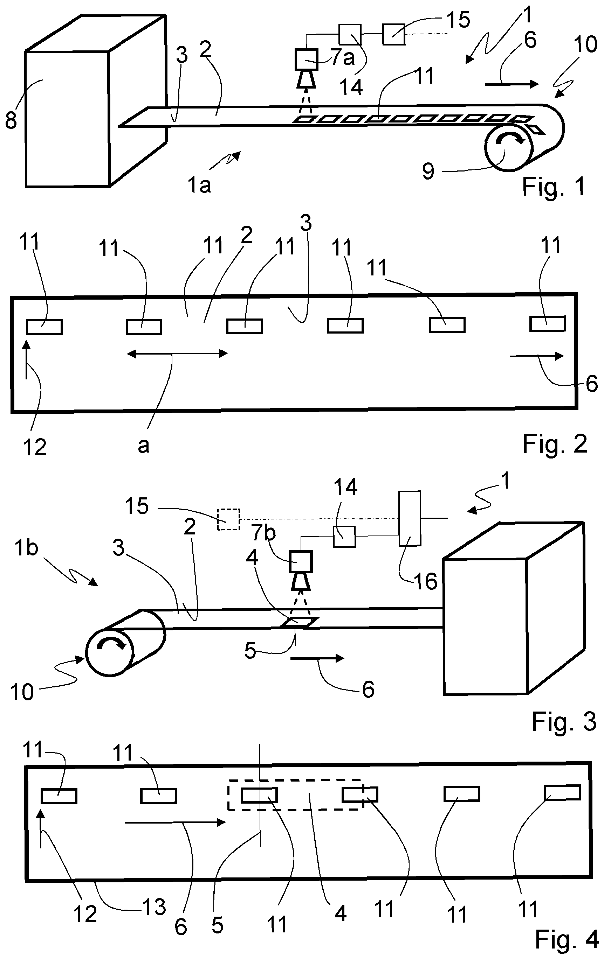

In der dargestellten und hier diskutierten Ausführungsform ist das System 1 in zwei Teile 1a, 1b aufgeteilt. Im ersten Teil des Systems 1a beim Hersteller des Blechs 2 unmittelbar in bzw. hinter der Walzanlage 8 wird mit dem ersten Teil 1a des Systems 1 die Akquisitionsphase des erfindungsgemäßen Verfahrens durchgeführt. Demgegenüber steht ein zweiter Teil 1b des Systems 1 beim Hersteller der Akkumulatoren. Während der erste Teil des Systems 1a in Figur 1 gezeigt ist, zeigt Figur 3 den zweiten Teil 1b des Systems.

Beide Teile 1a und 1b des Systems umfassen jeweils einen Bildsensor 7a, 7b zum Erfassen von räumlich hochaufgelösten optischen Bildern der Oberfläche 3 des Blechbands 2. Mit dem ersten Teil des Systems 1a wird während der Aquisitionsphase ein digitaler Zwilling des Blechbands 2 erzeugt, sodass später bei der Weiterverarbeitung markierungsfrei die jeweilige absolute Position der Messfläche 4 auf dem Band 2 bestimmbar ist.

In der dargestellten Ausführungsform nimmt der Bildsensor 7a des ersten Teils 1a des Systems 1 während der Akquisitionsphase Bilder einer Vielzahl von Akquisitionsflächen 11 auf. Um die detaillierte Betrachtung zu erleichtern, ist ein Ausschnitt der Oberfläche 3 des Blechbands 2 in Figur 2 vergrößert gezeigt. Die Akquisitionsflächen 11 werden von dem Kamerasystem 7a beim Aufspulen des Blechbands 2 auf das Coil 10 zeitlich nacheinander erfasst, indem das Blechband 2 in der Längsrichtung 6 einen kontinuierlichen, schnellen Vorschub erfährt. Für jede Akquisitionsfläche 11 macht das Kamerasystem 7 ein Bild mit einer matrixförmigen Anordnung von Pixeln oder Bildpunkten. In der gezeigten Ausführungsform sind die Akquisitionsflächen 11 äquidistant mit einem vorgegebenen Abstand a voneinander beanstandet. Dabei wird als Abstand a die räumliche Wiederholrate oder Periodizität der Akquisitionsflächen jeweils zwischen dem Beginn zweier benachbarter Akquisitionsflächen bezeichnet. Jede der Akquisitionsflächen hat eine Länge in der Längsrichtung 6 von 20 mm und eine Breite von 10 mm in der zu der Längsrichtung senkrechten Querrichtung 12.

Es hat sich herausgestellt, dass bei den meisten Endlosmaterialien die Oberfläche 3 eine die Position eines Orts auf der Oberfläche 3 in der Längsrichtung 6 eineindeutig identifizierende Mikrostruktur aufweist, die als optische Signatur erfassbar ist. Man kann diese Signatur daher als Fingerprint bezeichnen. Erstellt man zu einem späteren Zeitpunkt nach der Akquisitionsphase, in einer Identifizierungsphase ein Bild eines Oberflächenabschnitts (dieser wird als Messfläche 4 bezeichnet), in welchem zuvor bereits eine Akquisitionsfläche 11 erfasst wurde, so lässt sich durch das Bestimmen einer Ähnlichkeit des Bilds der Messfläche 4 mit den Bildern der zuvor erfassten Akquisitionsflächen 11 die Position der Messfläche 4 auf der Oberfläche 2 des Bands eindeutig bestimmen. Dies setzt voraus, dass beim Aufnehmen des Bildes der Messfläche 4 mit dem zweiten Teil des Systems 1b immer mindestens eine Akquisitionsfläche 11 vollständig innerhalb der Messflächen 4 liegt.

In der dargestellten Ausführungsform sind alle Akquisitionsflächen 11 entlang einer Kante 13 des Blechbands 2 angeordnet und haben in der Querrichtung 12 innerhalb gewisser Toleranzen den gleichen Abstand von der Kante 13.

Die so erfassten Bilder der Akquisitionsflächen 11 bilden jeweils einen Akquisitionsdatensatz. Aufgrund der hohen räumlichen Auflösung der mit dem Bildsensor 7a erfassten Bilder umfassen diese Akquisitionsdatensätze eine für einen effizienten Abgleich zu große Datenmenge. Daher wird nach der Bilderfassung mit dem Bildsensor 7a jeder der Akquisitionsdatensätze mit in einer Datenkompressionseinrichtung 14 mit einem einzigen Datenkompressionsverfahren komprimiert. Durch das Komprimieren wird aus jedem Akquisitionsdatensatz ein Positionsdatensatz erzeugt. Dieser Positionsdatensatz enthält komprimiert zumindest einen Teil der Information des Akquisitionsdatensatzes. Entscheidend ist, dass jeder aus der Mehrzahl von Akquisitionsdatensätzen mit dem gleichen Datenkompressionsverfahren komprimiert wird. Diese so erhaltenen Positionsdatensätze werden zusammen mit einer in der Längsrichtung 6 des Bandes 2 fortlaufenden Nummer als Ordnungskriterium in einer Datenbank 15 gespeichert. Auf diese Datenbank 15 greift auch der zweite Teil 1b des Systems 1 zu.

Nach dem Aufnehmen des hochaufgelösten Bilds der Messfläche 4 mit dem Bildsensor 7b des zweiten Teils 1b des Systems 1 wird der so erzeugte Messdatensatz ebenfalls einer Kompression mithilfe des gleichen Datenkompressionsverfahrens in einer Datenkompressionseinrichtung 14 unterzogen wie zuvor während der Akquisitionsphase die Akquisitionsdatensätze. Die Komprimierung erzeugt aus dem Messdatensatz einen komprimierten Messdatensatz. In einer Vergleichseinrichtung 16 wird dann eine Korrelation zwischen dem komprimierten Messdatensatz und den Positionsdatensätzen aus der Datenbank 15 durchgeführt. Bei einer hinreichend hohen Korrelation zwischen dem komprimierten Messdatensatz und genau einem aus der Mehrzahl von Positionsdatensätzen kann die fortlaufende Nummer dieses Positionsdatensatzes als Maß für die Position 5 der Messfläche 4 auf der Oberfläche 2 des Blechbands 3 genutzt werden. Da man die Akquisitionsposition der ersten Akquisitionsfläche 11 auf der Oberfläche 3 sowie den Abstand zwischen den Akquisitionsflächen 11 kennt, kann man aus der fortlaufenden Nummer des Positionsdatensatzes mit der größten Korrelation die Position der zugehörigen Akquisitionsfläche auf dem Band 2 berechnen.

Es versteht sich, dass die Datenkompression 14, die Datenbank und das Vergleichselement 60 auf mehreren Rechnern in Form von Software implementiert sind. Die Rechner zusammen bilden die Auswerteeinrichtung im Sinne dieser Anmeldung.

Die Messfläche 5 ist zwingend so bemessen, dass immer mindestens eine Akquisitionsfläche 11 vollständig innerhalb der Messfläche 4 liegt. Zudem ist in dem gezeigten Beispiel die Messfläche so dimensioniert, dass höchstens zwei Akquisitionsflächen 11 vollständig innerhalb der Messfläche 4 liegen. Daher kann eine Situation eintreten, in der genau zwei Akquisitionsflächen 11 innerhalb der Messfläche 5 liegen. Dann haben zwei Positionsdatensätze Korrelationen mit dem Messdatensatz, die über dem Korrelationsschwellenwert liegen. Die Korrektheit der Messung lässt sich dann am Ordnungskriterium zu den beiden Positionsdatensätzen aus der Datenbank verproben; die Nummern der Positionsdatensätze müssen aufeinander folgen. Es kann jedoch Situationen geben, in denen der Messdatensatz 5 zwei Korrelationen über dem Korrelationsschwellenwert mit zwei Positionsdatensätzen aufweist, auch wenn diese nicht nebeneinander auf der Oberfläche 3 des Blechbands 2 liegen. Dann würde man das so bestimmte Maß für die Position der Messfläche 5 verwerfen.

Jeder der Bildsensoren 7a, 7b umfasst neben einem Bilderfassungschip 17 ein Objektiv zum Abbilden der Messpunkte der Oberfläche auf den Bilderfassungschip 17. Das Objektiv hat zum Erreichen der erforderlichen optischen Auflösung eine hohe numerische Apertur, die mit einer geringen Schärfentiefe in einer Richtung z senkrecht zu der Oberfläche des Blechs 2 einhergeht. Aufgrund der hohen Vorschubgeschwindigkeit des Bands 2 in der Längsrichtung schlägt und flattert das Band 2 in dieser Richtung Z.

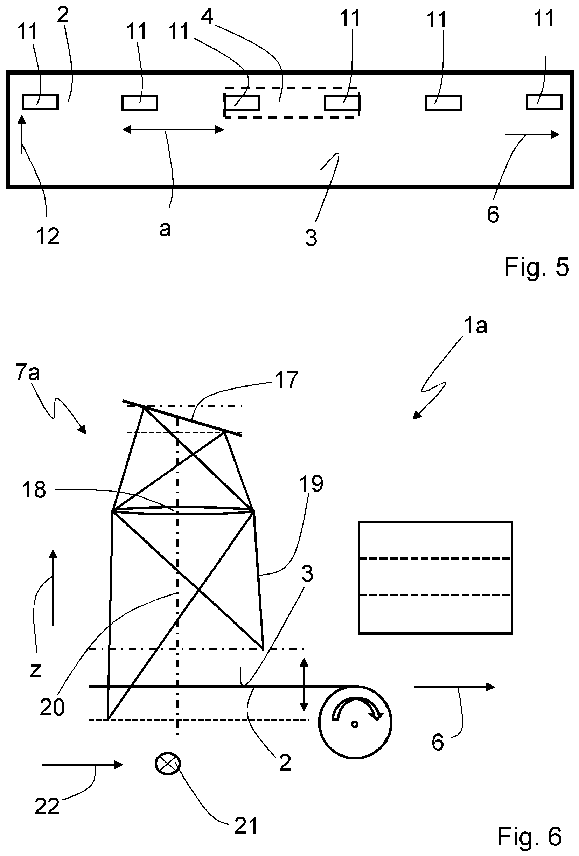

Daher erfolgt das Erfassen der räumlichen Intensitätsverteilung der elektromagnetischen Strahlung 19 in der in Figur 6 gezeigten Variante in der Akquisitionsphase mit einem Bilderfassungschip 17 dessen Ebene, in welcher die einzelnen Pixel angeordnet sind, gegenüber der Oberfläche 3 des Bands 2 und gegenüber der optischen Achse 20 des Objektivs 18 um eine zu der Oberfläche 3 parallele erste Kippachse 21 verkippt ist. Die erste Kippachse 21 erstreckt sich parallel zur Querrichtung 12.

Durch das Neigen oder Kippen der Ebene des Bilderfassungschips 17 gegenüber der optischen Achse 20 des die Oberfläche 3 auf den Bilderfassungschip 17 abbildenden Objektivs 17 gibt es, wenn die Ausdehnung des Chips senkrecht zur Kippachse und der Kippwinkel entsprechend gewählt sind, immer einen scharf abgebildeten Bereich jeder Akquisitionsfläche 11.

In der gezeigten Variante sind die Akquisitionsflächen 11 so auf der Oberfläche 3 angeordnet, dass jeweils benachbarte Akquisitionsflächen 11 unmittelbar aneinander anstoßen.

In dieser Variante ist nun bei dem zweiten Bildsensor 7b des zweiten Teils 1a des Systems 1 (nicht in den Figuren gezeigt) die Ebene des Bilderfassungschip 17, in welcher die einzelnen Pixel angeordnet sind, gegenüber der Oberfläche 3 des Bands 2 und gegenüber der optischen Achse 20 des Objektivs 18 um eine zu der Oberfläche 3 parallele zweite Kippachse 22 verkippt. Diese zweite Kippachse 22 erstreckt sich parallel zur Längsrichtung 6.

Die Ebenen der Bilderfassungschips 17 sind folglich in der Akquisitionsphase und in der Identifizierungsphase um zueinander senkrechte Kippachsen 21, 22 gegenüber der optischen Achse 20 der abbildenden Optik 18 verkippt. Daher findet sich in dem Bild der Messfläche immer ein scharfer Bereich, der innerhalb eines scharfen Bereichs einer jeden Akquisitionsfläche liegt. Diese Variante kommt daher ohne eine Fokusnachführung aus.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichenliste

- 1: System
- 1a: erster Teil des Systems
- 1b: zweiter Teil des Systems
- 2: Blechband
- 3: Oberfläche
- 4: Messfläche
- 5: Position
- 6: Längsrichtung
- 7a, 7b: Bildsensor
- 8: Walzanlage
- 9: Kern
- 10: Coil
- 11: Akquisitionsflächen
- 12: Querrichtung
- 13: Kante
- 14: Datenkompressionseinrichtung
- 15: Datenbank
- 16: Vergleichseinrichtung
- 17: Bilderfassungschip
- 18: Objektiv
- 19: elektromagnetische Strahlung
- 20: optische Achse
- 21: erste Kippachse
- 22: zweite Kippachse

- a: äquidistanter Abstand der Akquisitionsflächen
- z: Richtung senkrecht zur Oberfläche

## Patentansprüche

1. Verfahren zum Bestimmen eines Maßes für eine Position (5) einer Messfläche (4) auf einer Oberfläche (3) eines Endlosmaterials (2) in einer Längsrichtung (6) des Endlosmaterials (2)
in einer Akquisitionsphase mit den Schritten
A) Erfassen einer räumlichen Intensitätsverteilung einer von der Oberfläche (3) des Endlosmaterials (2) reflektierten oder gestreuten oder durch die Oberfläche (3) des Endlosmaterials (2) transmittierten elektromagnetischen Strahlung (19) in einer Mehrzahl von Akquisitionsflächen (11),
wobei jede aus der Mehrzahl von Akquisitionsflächen (11) in der Längsrichtung (6) an einer Akquisitionsposition angeordnet ist,
wobei alle Akquisitionsflächen zueinander deckungsgleich mit einer Längsausdehnung in der Längsrichtung (6) und einer Querausdehnung in einer Richtung senkrecht zu der Längsrichtung (6) sind,
wobei zwei in der Längsrichtung (6) benachbarte Akquisitionsflächen (11) zwei zumindest abschnittsweise verschiedene Bereiche der Oberfläche (3) überdecken,
wobei jede Akquisitionsfläche (11) eine Mehrzahl von Messpunkten aufweist und
wobei die Mehrzahl von Messpunkten in zumindest einer Zeile senkrecht zu der Längsrichtung (6) angeordnet ist,
B) Erzeugen einer Mehrzahl von Akquisitionsdatensätzen, wobei jeder Akquisitionsdatensatz die Messpunkte genau einer Akquisitionsfläche (11) beschreibt,
C) Komprimieren jedes aus der Mehrzahl von Akquisitionsdatensätzen mit genau einem Datenkompressionsverfahren, so dass für jede Akquisitionsfläche (11) ein Positionsdatensatz erhalten wird, und
D) Speichern jedes Positionsdatensatzes zusammen mit einem Ordnungskriterium in einer Datenbank, wobei mit dem Ordnungskriterium die Akquisitionsposition der Akquisitionsfläche (11) bestimmbar ist, und
in einer Identifizierungsphase mit den Schritten
i) Erfassen der räumlichen Intensitätsverteilung einer von der Oberfläche des Endlosmaterials reflektierten oder gestreuten oder durch die Oberfläche (3) des Endlosmaterials (2) transmittierten elektromagnetischen Strahlung (19) in einer Messfläche,
wobei die Messfläche (4) eine Mehrzahl von Messpunkten aufweist und
wobei die Mehrzahl von Messpunkten in zumindest einer Zeile senkrecht zu der Längsrichtung (6) angeordnet sind,
wobei die Messfläche (4) eine Querausdehnung senkrecht zu der Längsrichtung und eine Längsausdehnung in der Längsrichtung und eine Querposition senkrecht zu der Längsrichtung aufweist, so dass immer mindestens eine Akquisitionsfläche vollständig innerhalb der Messfläche liegt,
ii) Erzeugen eines Messdatensatzes, wobei der Messdatensatz die Messpunkte der Messfläche (4) beschreibt,
iii) Komprimieren des Messdatensatzes mit dem Datenkompressionsverfahren, so dass für die Messfläche (4) ein komprimierter Messdatensatz erhalten wird, und
iv) Berechnen einer Ähnlichkeit zwischen dem komprimierten Messdatensatz und einer Mehrzahl von Positionsdatensätzen aus der Datenbank und
v) wenn die in Schritt iv) berechnete Ähnlichkeit für einen der Positionsdatensätze einen vorgegebenen Ähnlichkeitsschwellenwert übersteigt, Bestimmen des Ordnungskriteriums zu diesem Positionsdatensatz und
vi) Ausgeben des in Schritt v) bestimmten Ordnungskriteriums als das Maß für die Position der Messfläche (4) auf der Oberfläche (3).

2. Verfahren nach dem vorhergehenden Anspruch, wobei die Mehrzahl von Akquisitionsflächen (11) in der Längsrichtung (6) voneinander beabstandeten ist, vorzugsweise äquidistant voneinander beabstandet ist.

3. Verfahren nach einem der vorhergehenden Ansprüche, wobei jede aus der Mehrzahl von Akquisitionsflächen (11) an einer gleichen Querposition (5) gemessen senkrecht zu der Längsrichtung (6) angeordnet ist.

4. Verfahren nach einem der vorhergehenden Ansprüche, wobei das Erfassen der räumlichen Intensitätsverteilung für jede aus der Mehrzahl von Akquisitionsflächen (11) und für die Messfläche (4) jeweils die Aufnahme eines Bildes umfasst, wobei die Mehrzahl von Messpunkten die Pixel des Bildes sind.

5. Verfahren nach dem vorhergehenden Anspruch, wobei das Aufnehmen des Bildes das Aufnehmen eines Interferogramms oder eines Speckle-Musters umfasst.

6. Verfahren nach einem der vorhergehenden Ansprüche, wobei die Messfläche (4) eine Querausdehnung senkrecht zu der Längsrichtung und eine Längsausdehnung in der Längsrichtung und eine Querposition senkrecht zu der Längsrichtung aufweist, so dass höchstens zwei Akquisitionsflächen vollständig innerhalb der Messfläche liegen.

7. Verfahren nach einem der vorhergehenden Ansprüche,
wobei das Erfassen der räumlichen Intensitätsverteilung der elektromagnetischen Strahlung in Schritt A) mit einem Bilderfassungschip mit einer Mehrzahl von matrixförmig in einer ersten Ebene angeordneten Pixeln erfolgt,
wobei die erste Ebene gegenüber einer Ebene der Oberfläche (3) des Endlosmaterials (2) oder gegenüber einer optischen Achse einer die Oberfläche auf den Bilderfassungschip abbildenden Optik in der Akquisitionsphase um eine zu der Ebene der Oberfläche parallele erste Kippachse (21) verkippt ist,
wobei das Erfassen der räumlichen Intensitätsverteilung der elektromagnetischen Strahlung in Schritt i) mit einem Bilderfassungschip mit einer Mehrzahl von matrixförmig in einer zweiten Ebene angeordneten Pixeln erfolgt,
wobei die zweite Ebene gegenüber der Ebene der Oberfläche (3) des Endlosmaterials (2) oder gegenüber der optischen Achse einer die Oberfläche auf den Bilderfassungschip abbildenden Optik in der Identifizierungsphase um eine zu der Ebene der Oberfläche (3) parallele zweite Kippachse (22) verkippt ist,
wobei die erste Kippachse und die zweite Kippachse voneinander verschiedene Winkel mit der Längsrichtung des Endlosmaterials einschließen, wobei sich die Winkel vorzugsweise um 90 Grad voneinander unterscheiden, und
wobei jeweils zwei benachbarte Akquisitionsflächen (11) einen maximalen Abstand voneinander aufweisen, sodass immer ein scharf abgebildeter Bereich zumindest einer Akquisitionsfläche (11) mit einem scharf abgebildeten Bereich der Messfläche (4) zusammenfällt.

8. Verfahren nach einem der vorhergehenden Ansprüche, wobei das Erfassen der räumlichen Intensitätsverteilung der elektromagnetischen Strahlung in den Schritten A) und i) mittels einer anamorphotischen Abbildung erfolgt.

9. Verfahren nach einem der vorhergehenden Ansprüche, wobei dann, wenn in Schritt v) die in Schritt iv) berechnete Ähnlichkeit des Messdatensatzes für eine Mehrzahl von Positionsdatensätzen den vorgegebenen Ähnlichkeitsschwellenwert übersteigt, in Schritt vi) das Ausgeben eines der Ordnungskriterien als Maß für die Position der Messflächen nur dann erfolgt, wenn die Mehrzahl von Positionsdatensätzen zu aufeinanderfolgenden Akquisitionspositionen gehört.

10. Verfahren nach einem der vorhergehenden Ansprüche, wobei die Messfläche in der Längsrichtung in eine erste Teilfläche und eine zweite Teilfläche unterteilt wird, wobei zunächst in Schritt iv) die Ähnlichkeit zwischen einem Teil des komprimierten Messdatensatzes für die erste Teilfläche und einer Mehrzahl von Positionsdatensätzen aus der Datenbank berechnet wird, und dann, wenn die Ähnlichkeit für einen der Positionsdatensätze den Ähnlichkeitsschwellenwert übersteigt, in Schritt v) das Ordnungskriterium zu diesem Positionsdatensatz bestimmt wird, und anderenfalls die Ähnlichkeit zwischen einem Teil des komprimierten Messdatensatzes für die zweite Teilfläche und einer Mehrzahl von Positionsdatensätzen aus der Datenbank berechnet wird, und dann, wenn die Ähnlichkeit für einen der Positionsdatensätze den Ähnlichkeitsschwellenwert übersteigt, in Schritt v) das Ordnungskriterium zu diesem Positionsdatensatz bestimmt wird.

11. Verfahren nach einem der vorhergehenden Ansprüche, wobei in der Identifizierungsphase die Schritte i) bis vi) für eine Mehrzahl von Positionen der Messfläche auf der Oberfläche wiederholt werden, wobei das Maß für die Position der Messfläche aus Schritt vi) einer ersten Bestimmung zu einer Einschränkung der Suchmenge aus der Mehrzahl von Positionsdatensätzen bei der Berechnung der Ähnlichkeit in Schritt iv) der folgenden Bestimmung verwendet wird.

12. Verfahren nach einem der vorhergehenden Ansprüche, wobei die Akquisitionsphase während der Herstellung des Endlosmaterials erfolgt und wobei in Schritt D) zusammen mit dem jeweiligen Positionsdatensatz und dem Ordnungskriterium ein Prozessdatensatz in der Datenbank gespeichert wird, wobei der Prozessdatensatz insbesondere einen Produktionsparameter der Herstellung oder einen Qualitätsparameter des Endlosmaterials an der Akquisitionsposition oder einen Zeitstempel beschreibt.

13. Verfahren nach einem der vorhergehenden Ansprüche, wobei während der Akquisitionsphase die Schritte A) bis D) und optional während der Identifizierungsphase die Schritte i) bis vi) für eine Mehrzahl von Akquisitionsflächen und Messflächen in der Querrichtung nebeneinander parallel ausgeführt werden.

14. Verfahren nach dem vorhergehenden Anspruch, wobei die Oberfläche (3) zumindest in der Akquisitionsphase oder in der Identifizierungsphase in der Längsrichtung bewegt wird und wobei die Oberfläche mit einem Blitzlicht beleuchtet wird.

15. System (1, 1a, 1b) zum Bestimmen eines Maßes für eine Position (5) einer Messfläche (4) auf einer Oberfläche (3) eines Endlosmaterials (2) in einer Längsrichtung (6) des Endlosmaterials (2), wobei das System
einen ersten Bildsensor (7a),
einen zweiten Bildsensor (7b),
eine Auswerteeinrichtung (14, 16) und
eine Datenbank (15) umfasst,
wobei der erste Bildsensor (7a) derart angeordnet und ausgestaltet ist, dass der erste Bildsensor (7a) in einem Betrieb des Systems (1, 1a, 1b) in einer Akquisitionsphase eine räumlichen Intensitätsverteilung einer von der Oberfläche (3) des Endlosmaterials (2) reflektierten oder gestreuten oder durch die Oberfläche (3) des Endlosmaterials (2) transmittierten elektromagnetischen Strahlung (19) in einer Mehrzahl von Akquisitionsflächen (11) erfasst,
wobei jede aus der Mehrzahl von Akquisitionsflächen (11) in der Längsrichtung (6) an einer Akquisitionsposition angeordnet ist,
wobei alle Akquisitionsflächen (11) zueinander deckungsgleich mit einer Längsausdehnung in der Längsrichtung (6) und einer Querausdehnung in einer Richtung senkrecht zu der Längsrichtung (6) sind,
wobei zwei in der Längsrichtung (6) benachbarte Akquisitionsflächen (11) zwei zumindest abschnittsweise verschiedene Bereiche der Oberfläche (3) überdecken,
wobei jede Akquisitionsfläche (11) eine Mehrzahl von Messpunkten aufweist und
wobei die Mehrzahl von Messpunkten in zumindest einer Zeile senkrecht zu der Längsrichtung (6) angeordnet sind,
wobei die Auswerteeinrichtung (14, 16) derart mit dem ersten Bildsensor verbunden ist, dass sie in dem Betrieb des Systems (1, 1a, 1b) eine Information über die räumliche Intensitätsverteilung von dem ersten Bildsensor (7a) erhält,
wobei die Auswerteeinrichtung (14, 16) derart eingerichtet ist, dass sie in dem Betrieb des Systems (1, 1a, 1b)
eine Mehrzahl von Akquisitionsdatensätzen erzeugt, wobei jeder Akquisitionsdatensatz die Messpunkte genau einer Akquisitionsfläche (11) beschreibt, jeden aus der Mehrzahl von Akquisitionsdatensätzen mit genau einem Datenkompressionsverfahren komprimiert, so dass für jede Akquisitionsfläche (11) ein Positionsdatensatz erhalten wird, und
jeden Positionsdatensatz zusammen mit einem Ordnungskriterium in einer Datenbank speichert, wobei mit dem Ordnungskriterium die Akquisitionsposition der Akquisitionsfläche (11) bestimmbar ist, und
wobei der zweite Bildsensor (7b) derart angeordnet und ausgestaltet ist, dass der zweite Bildsensor (7b) in dem Betrieb des Systems (1, 1a, 1b) in einer Identifizierungsphase die räumlichen Intensitätsverteilung einer von der Oberfläche (3) des Endlosmaterials (2) reflektierten oder gestreuten oder durch die Oberfläche (3) des Endlosmaterials (2) transmittierten elektromagnetischen Strahlung (19) in einer Messfläche (4) erfasst,
wobei die Messfläche (4) eine Mehrzahl von Messpunkten aufweist und wobei die Mehrzahl von Messpunkten in zumindest einer Zeile senkrecht zu der Längsrichtung (6) angeordnet sind,
wobei die Messfläche (4) eine Querausdehnung senkrecht zu der Längsrichtung und eine Längsausdehnung in der Längsrichtung und eine Querposition senkrecht zu der Längsrichtung aufweist, so dass immer mindestens eine Akquisitionsfläche vollständig innerhalb der Messfläche liegt,
wobei die Auswerteeinrichtung (14, 16) derart mit dem zweiten Bildsensor (7b) verbunden ist, dass sie in dem Betrieb des Systems (1, 1a, 1b) eine Information über die räumliche Intensitätsverteilung von dem zweiten Bildsensor (7b) erhält,
wobei die Auswerteeinrichtung (14, 16) derart eingerichtet ist, dass sie in dem Betrieb des Systems (1, 1a, 1b)
einen Messdatensatz erzeugt, wobei der Messdatensatz die Messpunkte der Messfläche (4) beschreibt,
den Messdatensatz mit dem Datenkompressionsverfahren komprimiert, so dass für die Messfläche (4) ein komprimierter Messdatensatz erhalten wird, und eine Ähnlichkeit zwischen dem komprimierten Messdatensatz und einer Mehrzahl von Positionsdatensätzen aus der Datenbank berechnet,
wenn die zuvor berechnete Ähnlichkeit für einen der Positionsdatensätze einen vorgegebenen Ähnlichkeitsschwellenwert übersteigt, das Ordnungskriterium zu diesem Positionsdatensatz bestimmt und
das zuvor bestimmte Ordnungskriterium als das Maß für die Position der Messfläche (4) auf der Oberfläche (3) ausgibt.
